# EUROPÄISCHE PATENTSCHRIFT

(11) **EP 1 239 195 B1**
(45) Veröffentlichungstag und Bekanntmachung des Hinweises auf die Patenterteilung: **09.04.2008**
(21) Anmeldenummer: 02005119.9
(22) Anmeldetag: 07.03.2002
(51) Int. Cl.: F16H 61/28, F16H 61/30

(54) **Gangaktuator zum Ein/Auslegen von Gängen eines Getriebes**
Gear shift actuator for shifting gears of a transmission
Actuateur pour commander un changement de vitesse d'une transmission

(30) Priorität: 07.03.2001 DE 10110941
(43) Veröffentlichungstag der Anmeldung: 11.09.2002
(73) Patentinhaber: Hydraulik-Ring GmbH, 97828 Marktheidenfeld (DE)
(72) Erfinder: Claus, Thomas, 89081 Ulm- Mähringen (DE); Meyer, Roland, 91154 Roth (DE); Wild, Andreas, 72669 Unterensingen (DE); Schmidt, Thomas, 93049 Regensburg (DE); Weigert, Wolfgang, 93105 Tegernheim (DE); Pindl, Stephan, Dr., 93077 Bad Abbach (DE)
(74) Vertreter: Bergemann, Holger Dirk

(56) Entgegenhaltungen:
- EP-A- 0 947 743
- DE-A1- 19 931 973
- PATENT ABSTRACTS OF JAPAN Bd. 1998, Nr. 10, 31. August 1998 (1998-08-31) & JP 10 141499 A (ISUZU MOTORS LTD), 29. Mai 1998 (1998-05-29)

## Beschreibung

Die vorliegende Erfindung betrifft einen Gangaktuator zum Ein/Auslegen von Gängen eines Getriebes, insbesondere bei AMT-Systemen (automatic manual transmission), entsprechend den Merkmalen des Anspruchs 1.

Bei sogenannten automatisierten Handschaltgetrieben (AMT) werden die Gänge des Getriebes mit Hilfe eines elektro-hydraulischen Aktuators eingelegt. Der Aktuator für ein Getriebe mit H-Schaltung ist dabei aus mehreren Kolben und entsprechender Mechanik aufgebaut, um eine Gangbewegung und/oder eine Gassenbewegung auszuführen.

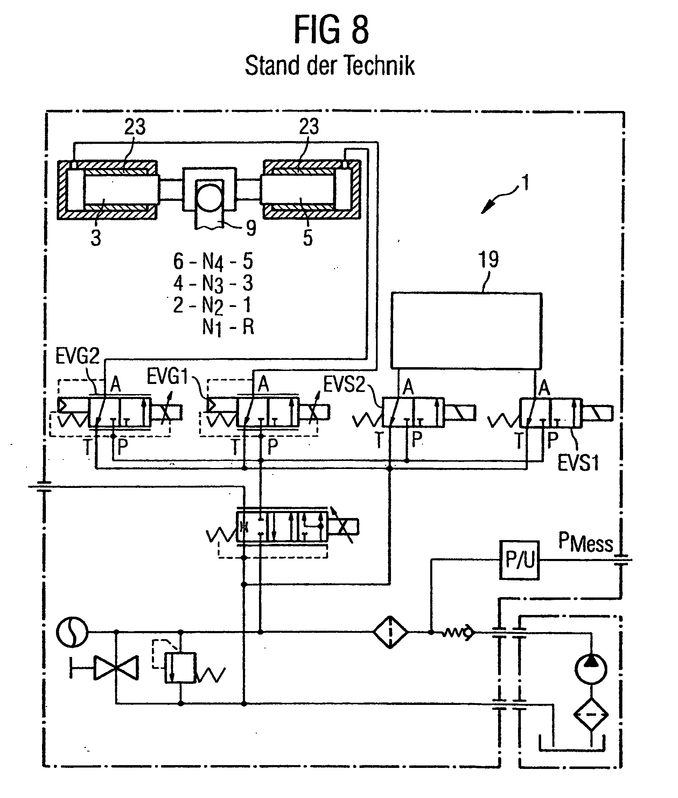

In Fig. 8 ist ein anderer bekannter Gangaktuator 1 sowie ein Gassenaktautor 19 dargestellt. Wie in Fig. 8 gezeigt, umfaßt der Aktuator zwei Arbeitskolben 3 und 5 sowie zwei Buchsen 23 oder zwei Hilfskolben, welche jeweils über ein Druckregelventil EVG1 und EVG2 mit geregeltem Systemdruck versorgt werden, um eine Schaltstange 9 zu bewegen. Die Stellung der Kolbenelemente 3, 5 sowie die der Buchsen 23 oder der Hilfskolben wird dabei durch eine komplizierte Ansteuerung der Druckregelventile EVG1 und EVG2 bestimmt. Ein derartiger Gangaktuator erfordert eine komplizierte mechanische Ausführung und weist eine Vielzahl von Bauteilen auf. Um die jeweilige Stellung der Schaltstange 9 bestimmen zu können, ist ein Sensor vorgesehen. Somit ergibt sich bei diesem bekannten Gangaktuator ein erhöhter Fertigungsaufwand und ein weit verzweigtes Hydraulikleitungssystem. Weiterhin muß eine aufwendige Steuerung vorgesehen werden, um die Ventile der Kolben zu steuern.

Bei dem gattungsgemässen Gangaktuator in DE 199 31 973 A1 sind zwei Arbeitskolben für die Gang-und die Gassenwahl des Getriebes vorgesehen, zu deren Betätigung vier Ventile vorgesehen sind. Ihnen sind ein Absperrventil und ein Druckregelventil vorgeschaltet. Die beiden Arbeitskolben werden beidseitig so beaufschlagt, daß sie in gewünschtem Maße verschoben werden, um auf diese Weise einen Schaltfinger oder eine Schaltwelle des Getriebes zu betätigen. Die Ansteuerung der unterschiedlichen Ventile ist aufwendig. Auch ist infolge der Vielzahl von Ventilen bei diesem Gangaktuator ein erhöhter Fertigungsaufwand notwendig und ein weit verzweigtes Hydraulikleitungssystem vorgesehen.

Bei einem weiteren bekannten Gangaktuator (EP-A-0 947 743) sind zwei Arbeitskolben sowie drei vorgeschaltete Ventile vorgesehen, mit denen die Arbeitskolben zum Schalten beziehungsweise zum Einlegen der Gassen betätigt werden. Der Gangaktuator hat ebenfalls eine konstruktiv aufwendige Ausbildung.

Es ist schließlich ein Gangaktuator bekannt (JP-10-14199), der zwei Arbeitskolben aufweist, mit denen eine Schaltstange verschwenkt werden kann. Die Arbeitskolben liegen an einander gegenüberliegenden Seiten am freien Ende der Schaltstange an. Zur Betätigung der Arbeitskolben sind vier Magnetventile vorgesehen.

Es ist daher Aufgabe der vorliegenden Erfindung, einen Gangaktuator zum Einlegen und Auslegen von Gängen in einem Getriebe bereitzustellen, welcher bei einfachem Aufbau und einfacher, kostengünstiger Herstellbarkeit ein sicheres und zuverlässiges Einlegen bzw. Auslegen von Gängen ermöglicht.

Diese Aufgabe wird durch einen Gangaktuator mit den Merkmalen des Patentanspruches 1 gelöst. Vorteilhafte Weiterbildungen sind Gegenstand der Unteransprüche.

Ein erfindungsgemäße Gangaktuator zum Einlegen und Auslegen von Gängen in einem automatisierten Handschaltgetriebe, insbesondere einem AMT-System, umfaßt eine erste Arbeitskolbenfläche, eine zweite Arbeitskolbenfläche, einen Hilfskolben und ein Druckregelventil. Das Druckregelventil regelt den Druck für die zweite Arbeitskolbenfläche. Die erste Arbeitskolbenfläche und das Druckregelventil werden mit einem Systemdruck versorgt.

Dabei sind die erste Arbeitskolbenfläche und das Druckregelventil über ein Absperrventil vom Systemdruck abkoppelbar. Erfindungsgemäß wird unter dem Systemdruck ein Druck verstanden, welcher zum Betrieb eines Hydrauliksystems bereitgestellt wird. Durch die erfindungsgemäße Ausgestaltung des Gangaktuators kann dieser im Vergleich mit dem Stand der Technik einfacher und aus weniger Bauteilen aufgebaut sein. Erfindungsgemäß wird nur genau ein Hilfskolben benötigt und weiter ist nur genau ein Druckregelventil notwendig, welches den Vorgang des Gangeinlegens bzw. des Gangauslegens regelt. Das Absperrventil stellt dabei sicher, daß während einem eingelegten Gang keine Kräfte auf das Getriebe durch den Gangaktuator übertragen werden, da das Absperrventil den Gangaktuator vom Systemdruck trennt. Dies verlängert die Lebensdauer des Getriebes. Weiterhin kann durch Trennen der Hydraulikverbindung vom Gangaktuator die Leckage minimiert werden, wodurch die Lebensdauer des Motors bzw. der Hydraulikpumpe verlängert werden kann.

Gemäß einer bevorzugten Ausgestaltung der vorliegenden Erfindung ist die erste Arbeitskolbenfläche an einem ersten Arbeitskolben ausgebildet und die zweite Arbeitskolbenfläche ist an einem zweiten Arbeitskolben ausgebildet. Somit weist der Gangaktuator zwei Arbeitskolben auf, welche an gegenüberliegenden Seiten einer Schaltstange des Getriebes angeordnet werden können.

Gemäß einer anderen bevorzugten Ausgestaltung der vorliegenden Erfindung sind die erste Arbeitskolbenfläche und die zweite Arbeitskolbenfläche an einem gemeinsamen Arbeitskolben ausgebildet. D.h. der gemeinsame Arbeitskolben ist als doppelt wirkender Kolben ausgebildet. Dadurch kann die Anzahl der Bauteile weiter verringert werden und insbesondere die Kosten und das Gewicht des Gangaktuators weiter reduziert werden.

Vorzugsweise regelt das Druckregelventil den Druck für den Hilfskolben. Somit werden die zweite Arbeitskolbenfläche und der Hilfskolben gemeinsam vom Druckregelventil mit geregeltem Systemdruck versorgt. Dabei werden die zweite Arbeitskolbenfläche und der Hilfskolben mit dem gleichen geregelten Systemdruck beaufschlagt.

Gemäß einer weiteren bevorzugten Ausgestaltung der vorliegenden Erfindung wird der Hilfskolben über das Absperrventil mit Systemdruck versorgt. Somit werden die erste Arbeitskolbenfläche und der Hilfskolben mit Systemdruck versorgt. Somit entspricht die Druckhöhe an der ersten Arbeitskolbenfläche und dem Hilfskolben der Druckhöhe des Systemdrucks, welcher ungeregelt auf die beiden Bauteile wirkt.

Um eine Neutralstellung der Schaltstange im Getriebe festzulegen, ist der Hilfskolben als Anschlag für die Schaltstange ausgebildet. Dadurch kann auf einfache und sichere Weise die Neutralstellung bestimmt werden, in welcher kein Gang eingelegt ist. In der Neutralstellung kann das Getriebe dann einen Gassenwechsel durchführen, wenn ein Gang eingelegt werden soll, welcher in einer anderen Gasse des Getriebes angeordnet ist.

Vorzugsweise sind die erste und die zweite Arbeitskolbenfläche unterschiedlich groß. Dadurch können die Kräfte, welche die Bewegung des Gangaktuators bewirken, mit geringerem Regelungsaufwand eingestellt werden. Besonders bevorzugt ist dabei die erste Arbeitskolbenfläche kleiner als die zweite Arbeitskolbenfläche.

Gemäß einer weiteren bevorzugten Ausgestaltung der vorliegenden Erfindung regelt das Druckregelventil die Druckhöhe des Systemdrucks in drei Bereichen. Dabei ist in einem ersten Bereich ein Gang in einer Gasse des Getriebes eingelegt, in einem zweiten Bereich ist eine Neutralstellung festgelegt und in einem dritten Bereich ist ein anderer Gang in der gleichen Gasse eingelegt. D.h., wenn z.B. in einer Gasse des Getriebes der erste und der zweite Gang angeordnet sind, ist im ersten Druckbereich eine Bewegung in Richtung des ersten Ganges möglich und im dritten Druckbereich ist eine Bewegung in Richtung des zweiten Ganges möglich. Dabei ist vorzugsweise im ersten Bereich der Systemdruck auf 0% bis 40% des Systemdrucks geregelt. Im zweiten Bereich (Neutralstellung) ist der Systemdruck bevorzugt auf 41% bis 59% des Systemdrucks geregelt und es findet nach Erreichen der Neutralstellung keine Bewegung statt. Im dritten Bereich ist der Systemdruck vorzugsweise auf 60% bis 100% des Systemdrucks geregelt.

Vorteilhafterweise ist das Absperrventil zum Unterbrechen der Systemdruckzufuhr zum Gangaktuator gleichzeitig als Kupplungsventil ausgebildet ist, welches auch einen Kupplungszylinder und einen Gassenaktuator mit Systemdruck versorgt. Dadurch führt das Absperrventil gleichzeitig auch noch andere Funktionen aus, so dass die Anzahl der Bauteile weiter verringert werden kann.

Erfindungsgemäß kann insbesondere die Neutralstellung des Gangaktuators abhängig vom Zustand des Druckregelventils bestimmt werden. Die Neutralstellung kann dabei immer ohne Verwendung eines Sensors bestimmt werden. Weiterhin können auch die beiden Endpositionen des Gangaktuators bestimmt werden. Um jedoch Zwischenstellungen des Gangaktuators, wie z.B. einen Synchronisationspunkt, definiert anzufahren, kann vorzugsweise ein Sensor zur Bestimmung der Position verwendet werden. Ein langsames Schalten der Gänge ist aber auch ohne Sensor möglich, da die Neutralstellung erfindungsgemäß immer ohne Sensor gefunden wird. Dadurch ist auch ein Gassenwechsel bei einem Sensorausfall möglich.

Nachfolgend wird die Erfindung anhand von bevorzugten Ausführungsbeispielen in Verbindung mit der Zeichnung beschrieben. In der Zeichnung ist:
- Figur 1: ein schematischer Hydraulikschaltplan eines Gangaktuators gemäß einem ersten Ausführungsbeispiel der vorliegenden Erfindung,
- Figur 2: eine schematische Ansicht des in Figur 1 gezeigten Gangaktuators in einem ersten geregelten Bereich,
- Figur 3: eine schematische Ansicht des in Figur 1 gezeigten Gangaktuators in einem zweiten geregelten Bereich,
- Figur 4: eine schematische Ansicht des in Figur 1 gezeigten Gangaktuators in einem dritten geregelten Bereich,
- Figur 5: ein schematisches Diagramm, welches den durch das Druckregelventil geregelten Druck in Abhängigkeit von der Stromstärke darstellt,
- Figur 6: eine schematische Ansicht eines Gangaktuators gemäß einem zweiten Ausführungsbeispiel der vorliegenden Erfindung,
- Figur 7: eine schematische Ansicht eines Gangaktuators gemäß einem dritten Ausführungsbeispiel der vorliegenden Erfindung und
- Figur 8: eine Ansicht eines Gangaktuators gemäß dem Stand der Technik.

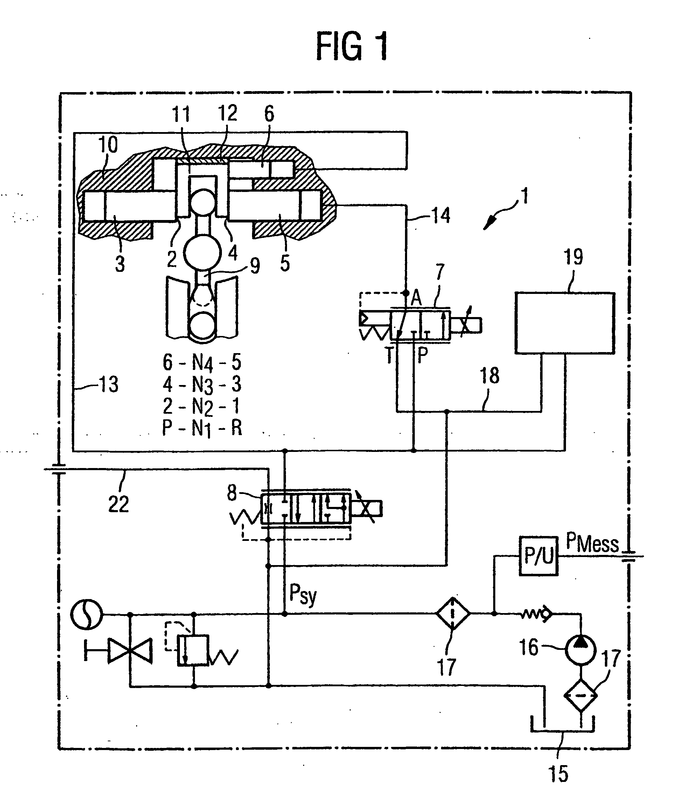

Nachfolgend wird unter Bezugnahme auf die Figuren 1 bis 5 ein erstes Ausführungsbeispiel gemäß der vorliegenden Erfindung beschrieben.

Wie in Figur 1 gezeigt, umfasst der Gangaktuator 1 gemäß dem ersten Ausführungsbeispiel einen ersten Arbeitskolben 3, einen zweiten Arbeitskolben 5, einen Hilfskolben 6, ein Druckregelventil 7 und ein Absperrventil 8. Der erste Arbeitskolben 3 weist eine erste Arbeitskolbenfläche 2 auf und der zweite Arbeitskolben 5 weist eine zweite Arbeitskolbenfläche 4 auf. Die Flächen der beiden Arbeitskolben sind unterschiedlich groß, wobei die Arbeitskolbenfläche 2 des ersten Kolbens kleiner als die Arbeitskolbenfläche 4 des zweiten Kolbens ist.

Der erste Kolben 3 und der Hilfskolben 6 sind über eine Leitung 13 mit dem als Kupplungsventil ausgebildeten Absperrventil 8 verbunden. Der zweite Kolben 5 ist über eine Leitung 14 mit dem Kupplungsventil verbunden. Dabei ist in der Leitung 14 ein Druckregelventil 7 angeordnet, welches den dem ersten Kolben 5 zugeführten Druck regelt. Das Kupplungsventil dient als Absperrventil, welches die Kolben bzw. das Druckregelventil 7 mit einem Systemdruck Psy versorgt.

Der Systemdruck Psy wird durch eine Pumpe 16 bereitgestellt, welche eine Hydraulikflüssigkeit aus einem Tank 15 ansaugt. Mehrere Filter 17 dienen zur Abscheidung von Verunreinigungen aus der Hydraulikflüssigkeit. Das Kupplungsventil 8 dient gleichzeitig auch noch zur Druckversorgung eines Kupplungszylinders über eine Leitung 22 sowie zur Druckversorgung eines Gassenaktuators 19, welcher über eine Leitung 18 mit Systemdruck Psy versorgt wird.

Wie in Figur 1 gezeigt, wirken die Kolben 3, 5 und 6 über einen Bügel 11 auf eine Schaltstange 9 ein. Mittels der Schaltstange 9 werden dabei die Gänge ein- und ausgelegt. Hierzu ist an der Schaltstange 9 ein nicht gezeigter Schaltfinger vorgesehen, welcher den jeweiligen Gang im Getriebe einlegt.

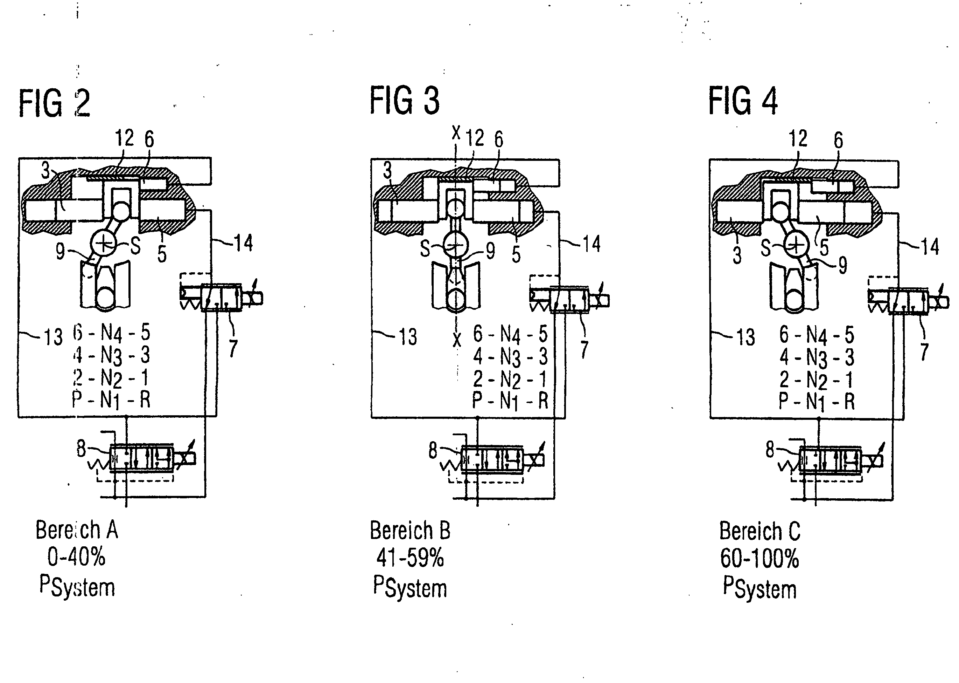

In den Figuren 2 bis 4 sind die drei möglichen Positionen der Schaltstange 9 in Abhängigkeit von verschiedenen Regelungsbereichen A, B und C des Druckregelventils 7 dargestellt.

In Figur 2 ist eine rechte Position der Schaltstange 9 gezeigt, welche die Schaltstange einnimmt, wenn das Druckregelventil 7 den Systemdruck Psy in einem ersten Bereich A von 0 bis 40% des Systemdrucks regelt. Hierbei ist die durch den ersten Kolben 3 auf die Schaltstange 9 von links aufgebrachte Kraft größer als die Summe der durch den Hilfskolben 6 und den zweiten Kolben 5 von rechts aufgebrachte Kraft. Dadurch bewegt sich die Schaltstange 9 nach rechts. Wie in Figur 2 gezeigt, schwenkt die Schaltstange 9 dabei um einen Schwenkpunkt S, so dass einer der in einer Schaltgasse links angeordneten Gänge eingelegt wird. In den Figuren 2 bis 4 sind vier Schaltgassen N1, N2, N3 und N4 angegeben, welche sich jeweils in Ebenen parallel zur dargestellten Bildebene befinden. Genauer, befinden sich der Rückwärtsgang R und die Parkstellung P in der ersten Gasse N1, der erste Gang 1 und der zweite Gang 2 befinden sich in der zweiten Gasse N2, der dritte Gang 3 und der vierte Gang 4 befinden sich in der dritten Gasse N3 und der fünfte Gang 5 sowie der sechste Gang 6 befinden sich in der vierten Gasse N4. Die Stellungen der eingelegten Gänge befinden sich dabei jeweils rechts und links der Achse der Schaltstange 9. D.h., wenn sich die Schaltstange 9 z.B. in der Schaltgasse N2 befindet, wird der zweite Gang 2 im Bereich A des Druckregelventil 7 eingelegt.

In Figur 3 ist die Stellung der Schaltstange 9 in einem zweiten Regelungsbereich B des Druckregelventils 7 dargestellt. Der zweite Regelungsbereich B umfasst dabei einen Druckbereich von 41 bis 59% des Systemdrucks Psy. Die Schaltstange 9 befindet sich dabei in einer Neutralstellung in einer Achse X-X. In dieser Neutralstellung der Schaltstange 9 kann z.B. ein Gassenwechsel im Getriebe erfolgen. Um die Neutralstellung sicher zu definieren ist weiter ein Anschlag 12 vorgesehen, welcher als Anschlag für den Hilfskolben 6 dient. Im Bereich B des Druckregelventils 7 liegt somit der Hilfskolben 6 immer am Anschlag 12 an. Gleichzeitig bildet der Hilfskolben 6 einen Anschlag für die Schaltstange 9, so dass die Schaltstange im zweiten Bereich immer sicher in der Neutralstellung positioniert ist.

In Figur 4 ist die Stellung der Schaltstange 9 in einem dritten Regelungsbereich C des Druckregelventils 7 dargestellt. Der dritte Regelungsbereich C umfasst dabei einen Druckbereich von 60 bis 100% des Systemdrucks Psy. Wie in Figur 4 gezeigt, wird die Schaltstange im dritten Bereich C nach links gedrückt, so dass sie wieder um den Schwenkpunkt S schwenkt. Dadurch ist wieder ein Gang in einer Gasse des Getriebes eingelegt. Wie in Figur 4 gezeigt, ist dabei ein Gang auf der rechten Seite der Gasse eingelegt. Wenn sich der Schaltfinger der Gasse z.B. in der zweiten Gasse N2 befindet, ist im dritten Regelungsbereich C somit der erste Gang 1 eingelegt.

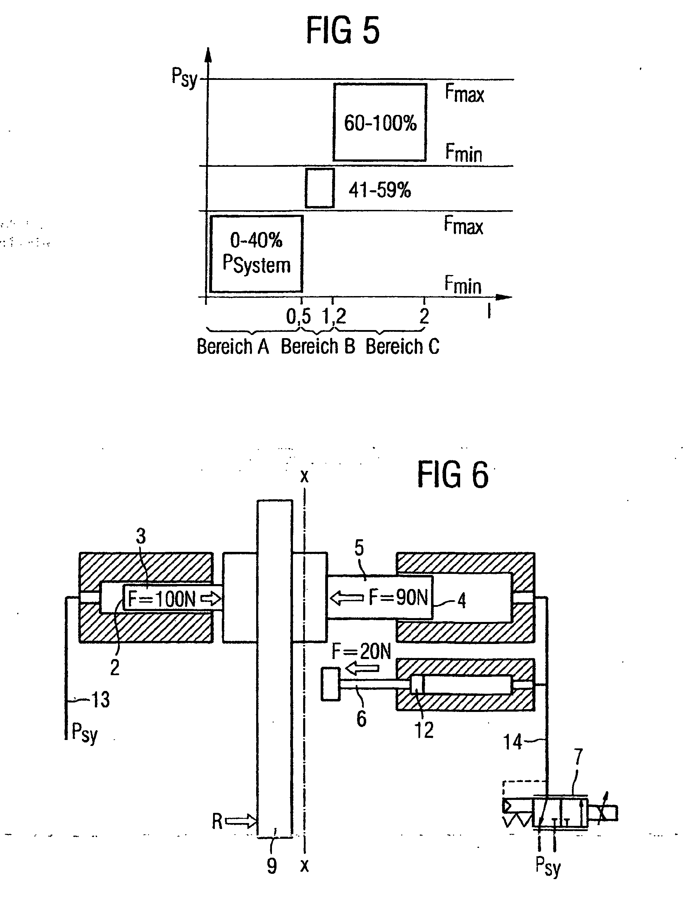

In Figur 5 sind zur Verdeutlichung die drei Regelungsbereiche A, B, C des Druckregelventils 7 dargestellt, wobei die Regelungsbereiche abhängig von der Regelung der Stromstärke I des Druckregelventils erreicht werden. Über die Druckregelung des Systemdrucks für den zweiten Kolben 5 wird somit das an der Schaltstange 9 herrschende Kräftegleichgewicht beeinflusst, so dass sich die Schaltstange 9 jeweils in einer gewünschten Position befindet. Wenn z.B. die erste Arbeitskolbenfläche 2 zur zweiten Arbeitskolbenfläche 4 ein Verhältnis von 1 zu 2 aufweisen, stellt sich bei halbem Druck auf der durch das Druckregelventil 7 geregelten Kolbenseite ein Kräftegleichgewicht ein, so dass sich die Schaltstange in der Neutralstellung befindet. Der Hilfskolben 6 liegt dabei an seinem Anschlag 12 an, so dass die durch ihn ausgeübten Kräfte nicht zu einer Verschiebung der Schaltstange führen.

Erfindungsgemäß kann der Gangaktuator somit unter Verwendung von einem einzigen Druckregelventil 7 betätigt werden. Das Kupplungsventil 8 sorgt dabei nur dafür, dass der Gangaktuator bei geschlossener Kupplung vom Systemdruck Psy getrennt ist, so dass sichergestellt ist, dass während der Fahrt bei geschlossener Kupplung keine Kräfte vom Gangaktuator auf das Getriebe wirken könne. Dadurch kann die Lebensdauer des Getriebes verlängert werden. Weiterhin wird eine zusätzliche Leckage verhindert. Der erfindungsgemäße Gangaktuator weist eine einfache mechanische Ausführung im Vergleich mit dem Stand der Technik auf, und benötigt weniger Bauteile, wodurch ein geringerer Fertigungsaufwand, ein geringeres Gewicht und eine verbesserte Zuverlässigkeit erreicht werden kann. Weiterhin ergeben sich Einsparungen auf der Elektronikseite, dem Kabelbaum und der Steuerung, da nur noch ein Druckregelventil gesteuert werden muss.

In Figur 6 ist ein Gangaktuator gemäß einem zweiten Ausführungsbeispiel der vorliegenden Erfindung dargestellt. Gleiche bzw. funktional gleiche Teile sind dabei mit den gleichen Bezugszeichen wie im ersten Ausführungsbeispiel bezeichnet.

Wie in Figur 6 gezeigt, sind beim Gangaktuator gemäß dem zweiten Ausführungsbeispiel der zweite Kolben 5 und der Hilfskolben 6 über eine Leitung 14 mit dem Druckregelventil 7 verbunden. Somit wird der Systemdruck Psy sowohl für den zweiten Kolben 5 als auch den Hilfskolben 6 durch das Druckregelventil 7 geregelt. Am ersten Kolben 2 liegt dagegen der ungeregelte Systemdruck Psy an.

In dem in Figur 6 gezeigten Ausführungsbeispiel hat der erste Kolben 3 zum zweiten Kolben 5 ein Flächenverhältnis von 5:9. Weiter weist der erste Kolben 3 zum Hilfskolben 6 ein Flächenverhältnis von 5:2 auf. Wenn nun der Druck Psy am ersten Kolben 3 doppelt so groß ist wie der durch das Druckregelventil 7 in der Leitung 14 geregelte Druck für den zweiten Kolben 5 und den Hilfskolben 6, so bewegt sich die Schaltstange 9 von der in der Figur 6 dargestellten Position in Richtung des Pfeils R, da die Kraft F des ersten Kolbens mit 100 N größer als die Kraft F des zweiten Kolbens mit 90 N ist. Allerdings wird sich die Schaltstange 9 nur bis in die Neutralstellung X-X bewegen, da dort der Hilfskolben 6 in seiner ausgefahrenen Stellung positioniert ist und an dieser Position ein Kräftegleichgewicht vorhanden ist, da der Hilfskolben 6 an seinem Anschlag 12 anliegt. Der Hilfskolben 6 wirkt somit als Anschlag für die Schaltstange, so dass diese in der Neutralstellung X-X positioniert ist. Die Schaltstange 9 kann somit bei definiertem Druck mittels der Steuerkennlinie des Druckregelventils 7 gesteuert werden und ohne Sensorik in die Neutralstellung gebracht werden. D.h., für das Auffinden der Neutralstellung der Schaltstange ist kein Sensor notwendig. Falls aus Sicherheitsgründen ein zusätzlicher Sensor vorhanden ist, um die Neutralstellung zu bestimmen, kann bei einem Ausfall dieses Sensors mit dem erfindungsgemäßen Gangaktuator trotzdem die Neutralstellung gefunden werden.

Die in Figur 6 angegeben Kräfte sind nur beispielhafte Angaben. In einer AMT-Anwendung sind die Arbeitskolbenflächen 2 und 4 und die Kolbenfläche des Hilfskolbens 6 entsprechend den Ein- und Auslegekräften des Getriebes zu dimensionieren.

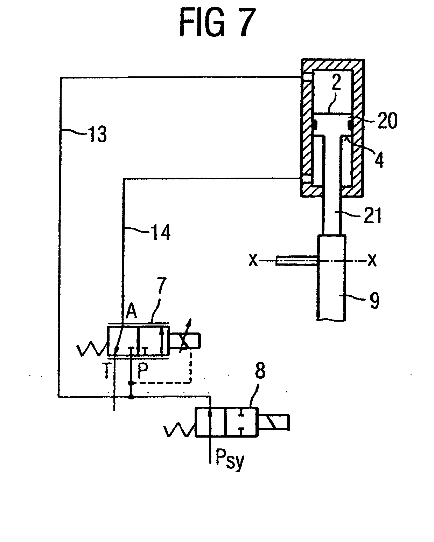

In Figur 7 ist ein Gangaktuator gemäß einem dritten Ausführungsbeispiel der vorliegenden Erfindung dargestellt. Gleiche bzw. funktional gleiche Teile sind dabei mit den gleichen Bezugszeichen wie im ersten und zweiten Ausführungsbeispiel bezeichnet.

Wie in Figur 7 gezeigt, ist im Gegensatz zu den vorher beschriebenen Ausführungsbeispielen anstelle eines ersten und eines zweiten Kolbens ein gemeinsamer, doppelt wirkender Kolben 20 vorgesehen. Der Kolben 20 weist eine erste Arbeitskolbenfläche 2 und eine zweite Arbeitskolbenfläche 4 auf. Die zweite Arbeitskolbenfläche 4 ist dabei nur halb so groß wie die erste Arbeitskolbenfläche 2.

Der Kolben 20 ist über eine Verbindungsstange 21 fest mit der Schaltstange 9 verbunden, um die Bewegung der Schaltstange 9 in Abhängigkeit vom durch das Druckregelventil 7 geregelten Druck zu definieren.

Die erste Arbeitskolbenfläche 2 wird dabei über eine Leitung 13 unmittelbar mit dem Systemdruck Psy beaufschlagt, während die zweite Arbeitskolbenfläche 4 über eine Leitung 14 mit dem durch das Druckregelventil 7 geregelten Systemdruck beaufschlagt wird. Durch die Verwendung eines doppelt wirkenden Kolbens, kann der erfindungsgemäße Gangaktuator gemäß dem dritten Ausführungsbeispiel somit weiter vereinfacht werden und ein geringeres Gewicht aufweisen. In Figur 7 ist der zur Festlegung der Neutralposition verwendete Hilfskolben nicht dargestellt. Ansonsten entspricht das Funktionsprinzip des Gangaktuators den vorher beschriebenen Ausführungsbeispielen, so dass auf die dort gegebene Beschreibung verwiesen werden kann.

Zusammenfassend betrifft die vorliegenden Erfindung einen Gangaktuator zum Einlegen und Auslegen von Gängen in einem automatisierten Handschaltgetriebe. Der Gangaktuator umfasst eine erste Arbeitskolbenfläche 2, eine zweite Arbeitskolbenfläche 4, einen Hilfskolben 6 und ein Druckregelventil 7. Das Druckregelventil 7 regelt den Druck für die zweite Arbeitskolbenfläche 4. Die erste Arbeitskolbenfläche 2 und das Druckregelventil 7 werden mit einem Systemdruck Psy versorgt und die erste Arbeitskolbenfläche 2 und das Druckregelventil 7 sind über ein Absperrventil 8 vom Systemdruck abkoppelbar.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

## Patentansprüche

1. Gangaktuator, der das Einlegen und Auslegen von Gängen eines Getriebes insbesondere automatisierbar durchführt, umfassend
- einen ersten Arbeitskolben (3) mit einer ersten Arbeitskolbenfläche (2),
- einen zweiten Arbeitskolben (5) mit einer zweiten Arbeitskolbenfläche (4),
- einen Hilfskolben (6),
- wobei die Kolben (3, 5, 6) auf eine Schaltstange (9) des Getriebes zu deren Verstellung in drei Positionen wirken,
- wobei der Hilfskolben (6) als Anschlag für die Schaltstange (9) ausgebildet ist, um die Neutralstellung X-X der Schaltstange (9) festzulegen,
- und ein Druckregelventil (7), welches den Druck für die zweite Arbeitskolbenfläche (4) und den Hilfskolben (6) regelt,
- wobei die erste Arbeitskolbenfläche (2) und das Druckregelventil (7) mit einem Systemdruck (Psy) versorgt werden, und wobei die erste Arbeitskolbenfläche (2) und das Druckregelventil (7) über ein Absperrventil (8) vom Systemdruck (Psy) abkoppelbar sind.

2. Gangaktuator nach Anspruch 1, **dadurch gekennzeichnet, dass** der Hilfskolben (6) über das Absperrventil (8) mit Systemdruck versorgt wird.

3. Gangaktuator nach Anspruch 1 oder 2, **dadurch gekennzeichnet, dass** die erste und die zweite Arbeitskolbenfläche (2, 4) unterschiedlich groß sind.

4. Gangaktuator nach Anspruch 3, **dadurch gekennzeichnet, dass** die erste Arbeitskolbenfläche (2) kleiner als die zweite Arbeitskolbenfläche (4) ist.

5. Gangaktuator nach einem der Ansprüche 1 bis 4, **dadurch gekennzeichnet, dass** das Druckregelventil (7) die Druckhöhe des Systemdrucks in drei Bereichen regelt, wobei in einem ersten Bereich (A) ein Gang in einer Gasse (N1, N2, N3, N4) des Getriebes eingelegt wird, in einem zweiten Bereich (B) eine Neutralstellung (X-X) festgelegt ist und in einem dritten Bereich (C) ein anderer Gang in der Gasse eingelegt wird.

6. Gangaktuator nach Anspruch 5, **dadurch gekennzeichnet, dass** im ersten Bereich (A) der Systemdruck auf 0% bis 40% des Systemdrucks geregelt ist.

7. Gangaktuator nach Anspruch 5 oder 6, **dadurch gekennzeichnet, dass** im zweiten Bereich (B) der Systemdruck auf 41% bis 59% des Systemdrucks geregelt ist.

8. Gangaktuator nach einem der Ansprüche 5 bis 7, **dadurch gekennzeichnet, dass** im dritten Bereich (C) der Systemdruck auf 60% bis 100% des Systemdrucks geregelt ist.

9. Gangaktuator nach einem der Ansprüche 1 bis 8, **dadurch gekennzeichnet, dass** das Absperrventil (8) als Kupplungsventil ausgebildet ist, welches auch einen Kupplungszylinder und einen Gassenaktuator (19) mit Systemdruck versorgt.

10. Gangaktuator nach einem der Ansprüche 1 bis 9, **gekennzeichnet durch** einen Sensor zur Bestimmung der Position der Schaltstange (9).

## Claims

1. Gear shift actuator which carries out the engagement and disengagement of gears of a transmission, in particular in a manner which can be automated, comprising:
- a first operating piston (3) having a first operating piston surface (2),
- a second operating piston (5) having a second operating piston surface (4),
- an auxiliary piston (6),
- the pistons (3, 5, 6) acting on a switching rod (9) of the transmission for the adjustment thereof in three positions,
- the auxiliary piston (6) being constructed as a stop for the switching rod (9) in order to determine the neutral position X-X of the switching rod (9),
- and a pressure control valve (7) which controls the pressure for the second operating piston surface (4) and the auxiliary piston (6),
- the first operating piston surface (2) and the pressure control valve (7) being supplied with a system pressure (Psy) and the first operating piston surface (2) and the pressure control valve (7) being able to be decoupled from the system pressure (Psy) by means of a shut-off valve (8).

2. Gear shift actuator according to claim 1, **characterised in that** the auxiliary piston (6) is supplied with system pressure by means of the shut-off valve (8).

3. Gear shift actuator according to claim 1 or 2, **characterised in that** the first and the second operating piston surface (2, 4) are of different sizes.

4. Gear shift actuator according to claim 3, **characterised in that** the first operating piston surface (2) is smaller than the second operating piston surface (4).

5. Gear shift actuator according to any one of claims 1 to 4, **characterised in that** the pressure control valve (7) controls the pressure level of the system pressure in three ranges, a gear being engaged in a channel (N1, N2, N3, N4) of the transmission in a first range (A), a neutral position (X-X) being determined in a second range (B) and another gear being engaged in the channel in a third range (C).

6. Gear shift actuator according to claim 5, **characterised in that**, in the first range (A), the system pressure is controlled to be from 0% to 40% of the system pressure.

7. Gear shift actuator according to claim 5 or 6, **characterised in that**, in the second range (B), the system pressure is controlled to be from 41% to 59% of the system pressure.

8. Gear shift actuator according to any one of claims 5 to 7, **characterised in that**, in the third range (C), the system pressure is controlled to be from 60% to 100% of the system pressure.

9. Gear shift actuator according to any one of claims 1 to 8, **characterised in that** the shut-off valve (8) is constructed as a coupling valve which also supplies a coupling cylinder and a channel actuator (19) with system pressure.

10. Gear shift actuator according to any one of claims 1 to 9, **characterised by** a sensor for determining the position of the switching rod (9).

## Revendications

1. Actionneur de vitesse pour commander un changement de vitesse d'une boîte de vitesses, notamment réalisé de façon à pouvoir être automatisé, comprenant :
- un premier piston de travail (3) avec une première surface de piston de travail (2),
- un second piston de travail (5) avec une seconde surface de piston de travail (4),
- un piston auxiliaire (6),
- les pistons (3, 5, 6) agissant sur une tige de commande (9) de la boîte de vitesses pour la régler dans trois positions,
- le piston auxiliaire (6) prenant la forme d'une butée pour la tige de commande (9), afin de déterminer la position neutre X-X de la tige de commande (9),
- et une soupape modulatrice de pression (7) réglant la pression pour la seconde surface de piston de travail (4) et le piston auxiliaire (6),
- la première surface de piston de travail (2) et la soupape modulatrice de pression (7) étant alimentées en pression du système (Psy) et la première surface de piston de travail (2) et la soupape modulatrice de pression (7) pouvant être découplées de la pression du système (Psy) par l'intermédiaire d'un clapet d'arrêt (8).

2. Actionneur de vitesse selon la revendication 1,
**caractérisé en ce que** le piston auxiliaire (6) est alimenté en pression du système par l'intermédiaire du clapet d'arrêt (8).

3. Actionneur de vitesse selon la revendication 1 ou 2,
**caractérisé en ce que** la première et la seconde surface de piston de travail (2, 4) sont de taille différente.

4. Actionneur de vitesse selon la revendication 3,
**caractérisé en ce que** la première surface de piston de travail (2) est inférieure à la seconde surface de piston de travail (4).

5. Actionneur de vitesse selon l'une quelconque des revendications 1 à 4,
**caractérisé en ce que** la soupape modulatrice de pression (7) règle le niveau de pression du système dans trois plages, une vitesse étant passée dans une ruelle (N1, N2, N3, N4) de la boîte de vitesses dans une première plage (A), une position neutre (X-X) étant déterminée dans une deuxième plage (B), et une autre vitesse étant passée dans la ruelle dans une troisième plage (C).

6. Actionneur de vitesse selon la revendication 5,
**caractérisé en ce que** la pression du système est réglée de 0 % à 40 % de la pression du système dans la première plage (A).

7. Actionneur de vitesse selon la revendication 5 ou 6,
**caractérisé en ce que** la pression du système est réglée de 41 % à 59 % de la pression du système dans la deuxième plage (B).

8. Actionneur de vitesse selon l'une quelconque des revendications 5 à 7,
**caractérisé en ce que** la pression du système est réglée sur 60 % à 100 % de la pression du système dans la troisième plage (C).

9. Actionneur de vitesse selon l'une quelconque des revendications 1 à 8,
**caractérisé en ce que** le clapet d'arrêt (8) prend la forme d'une soupape d'embrayage qui alimente également en pression du système un cylindre d'embrayage et un actionneur de ruelle (19).

10. Actionneur de vitesse selon l'une quelconque des revendications 1 à 9,
**caractérisé par** un capteur servant à déterminer la position de la tige de commande (9).
